# EUROPEAN PATENT SPECIFICATION

(11) **EP 3 778 161 B1**
(45) Date of publication and mention of the grant of the patent: **20.03.2024**
(21) Application number: 19722933.9
(22) Date of filing: 02.04.2019
(51) Int. Cl.: B27K 7/00, B01D 3/00, C07C 7/00

(54) **METHOD FOR REDUCING TCA IN CORK PRODUCTS**
VERFAHREN ZUR REDUZIERUNG VON TCA IN KORKERZEUGNISSEN
PROCEDE DE REDUCTION DE LA TCA DANS LES PRODUITS EN LIÈGE

(30) Priority: 05.04.2018 ES 201830340
(43) Date of publication of application: 17.02.2021
(73) Proprietor: Escor Processos, Lda, 41370 Cazalla de la Sierra, Sevilla (ES)
(72) Inventor: BECERRA MARTÍN, Rogelio, 41370 Sevilla (ES)
(74) Representative: Covadonga Fernández-Vega Feijoo, Maria
(86) International application number: PCT/ES2019/070220
(87) International publication number: WO 2019/193228

(56) References cited:
- JP-A- 2009 198 125
- PT-A- 104 221
- US-A- 5 352 417

## Description

### Object of the Invention

The invention is conceived for reducing TCA or trichloroanisole molecule levels present in certain types of corks, so that an expert or user in general will not be able to perceive the smell and taste given off by products containing molecules of this type. To that end, the cork products to be treated are introduced into a chamber which is part of the device of the invention, such that after the application of a method through a series of steps associated with the device, each of the treated products will experience a substantial reduction in its TCA levels, without leading to the deterioration or deformation of the cork products, even if they are subjected to high air temperatures, supersaturated dry steam, and pressure during the process.

The device for reducing TCA in cork products described herein but not object of the invention comprises at least one hot air generator, a supersaturated dry steam boiler, and an electric extractor, all of them being joined by means of tubes or the like to a chamber having at least one natural ventilation outlet and temperature sensors; and where the associated method for reducing TCA in cork products comprises an initial step of causing the entry of hot air, then a step of causing the entry of supersaturated dry steam along with the simultaneous initiation of an electrical air extraction step, and finally a step involving an optimum process temperature for reducing TCA in cork products.

The field of application of the invention is comprised in the cork industry, specifically for the treatment of natural cork, technical cork stoppers, cork discs, or the like.

### Background of the Invention

Trichloroanisole or TCA is a substance resulting from the degradation of trichlorophenols that originate in turn from the binding of cork phenols with chlorine particles dissolved in air. This degradation usually takes place in damp environments and is caused by a series of fungi. TCA or trichloroanisole molecules present in certain types of cork used in wine bottles or the like lead to the problem of wines having a certain smell commonly defined as corky. This defect is one of the most widespread problems worldwide because once the TCA molecules seep into wine, is impossible to eliminate them, in fact the existence of these molecules at high proportions is reason for rejection by consumers.

TCA sensory detection thresholds vary for each user or expert taster, where in the case of professional wine tasters, the quality and characteristics of wine after bottling are evaluated by means of their senses, expressing their perceptions according to their personal criterion. Therefore and regardless of the quality of the wine, if the cork stopper closing the wine bottle gives off TCA molecules, these molecules will be noted in the taste and smell of the wine, making this one of the most pressing problems for winemakers.

In view of the foregoing, different patent documents which seek to reduce trichloroanisole or TCA levels by subjecting, for that purpose, cork stoppers to different temperature, pressure, or external exposure conditions can be found in the state of the art. This is reflected in the patent documents discussed below.

Patent document ES2247180T3 discloses a method whereby TCA particles are extracted from cork stoppers by means of a process in gas phase formed by ethanol vapor, water vapor, and air at a temperature comprised between 25°C and 100°C and a pressure comprised between 0.01 and 2 bar. As inferred from the results experimentally obtained in the tests described in the patent document itself, the problem of this patent document is that at temperatures of 70°C irreversible distortions of the stopper are observed after cooling. In contrast, in the case of the present invention the cork stoppers are subjected to an optimum temperature of 110°C or more inside the chamber, by means of hot air and supersaturated dry steam, without causing deformations of the cork stoppers.

Another example of the state of the art is patent document ES2268459T3 which discloses a process based on the treatment of cork granules and stoppers by means of extracting TCA compounds dragged in water vapor. This patent document describes two types of apparatus for cork granules and cork stoppers which are unlike the configuration of the device of the present invention; and furthermore, as indicated in the mentioned patent document, if the cork stoppers used in the process are subjected to the same values as the cork granules, i.e., to temperatures comprised between 100°C and 125°C and a standard pressure of 0.2 and 0.8 bar, these stoppers would exhibit structural deformations. Based on the foregoing, it can be concluded that this patent document reduces cork stopper TCA levels in a way that is different from that of the device and method of the present invention. Given that the cork stoppers of the present invention are subjected to conditions in which hot air and supersaturated dry steam are used, the optimum internal temperature conditions inside the chamber containing the stoppers is 110°C or more, with continuous ventilation flow and without causing stopper deformations.

Patent document ES2402890T3 discloses a method which allows applying direct treatment on cork stoppers with supercritical fluids in a high-pressure vessel using to that end a separating device, as well as the shrinkage and expansion of the cork stoppers to reduce TCAs. In contrast, in the device and method of the invention, supersaturated steam and hot air having temperature and pressure values are used to reduce TCA molecules inside a given chamber, so it has nothing to do with the disclosures of the mentioned patent.

Finally, patent document ES2019562 of the state of the art is referred to, which uses water vapor for deodorization of cork; in this patent document the cork pieces to be treated have a relatively small predetermined size and are introduced in a vessel with pressurized water vapor to be subsequently cooled. In contrast to the device and method of the invention, regardless of the size of the cork products to be treated, they are subjected to steps involving hot air and supersaturated steam with a continuous flow of extraction of both media, such that considerable TCA molecules are extracted instantaneously at the supersaturated dry steam inlet. Other methods and corresponding devices are known from US 5 352 417 A, PT 104 221 A.

As a result, the method for reducing TCA in cork products object of the present invention is a step forward in the cork sector, given that all forms of natural cork stoppers, technical stoppers, discs for stopper, boiled and raw cork plank, or the like, can be subjected to temperatures with hot air and supersaturated dry steam higher than 85°C without the cork deforming or losing its properties, as has been the case up until now. In that sense, when a cork product is treated according to the method of the invention it goes through a series of steps furthermore caused by a continuous ventilation flow, which allows reducing TCA particles in a more effective manner that is different from what has been known up until now in the cork sector.

A detailed description of the invention completing these general ideas set forth in this section is provided below.

### Description of the Invention

The device for reducing TCA in cork products described herein but not object of the present invention a comprises a chamber having at least one natural ventilation outlet, and there are connected to said chamber by means of tubes or the like at least one hot air generator, a supersaturated steam boiler, and an electric extractor, such that when different batches of cork products are placed therein, these products are subjected to different steps with temperature produced by hot air and dry steam, whereby TCA particles are extracted out of the chamber, therefore reducing the TCA particle level in each of the products.

The chamber the device comprises has dimensions such that they allow introducing therein a plurality of metal containers with a lattice structure in which the cork products are introduced, preferably all forms of natural cork stoppers, technical stoppers, discs for stopper, boiled and raw cork plank, and even cork granules. At a lower point of one of the walls or sides of the chamber, preferably on the side opposite the door, there is at least one natural ventilation outlet. This ventilation is located at a lower point so that the colder air inside the chamber naturally moves out through said ventilation once the doors of the chamber are closed, as explained herein below.

At least one hot air generator is connected by means of tubes or the like to the chamber, there preferably being two generators connected to the chamber. The inlet or inlets for the entry of hot air into the chamber are preferably located at two points, covering the entire chamber in a lower area, but above the natural ventilation outlet. The hot air generator introduces into the chamber air at a temperature established between 175°C and 185°C, with a nominal heat input of 103.2 KW, a heating capacity of 93 KW, and an airflow comprised between 1500 and 2000 m³/h, with the optimum temperature of the hot air entering the chamber being 180°C.

The supersaturated dry steam inlet is located linearly above the heat inlets, i.e., the inlet for the entry of the supersaturated steam into the chamber is carried out by means of the linear arrangement of perforated tubes along two opposite walls of the chamber. These steam tubes are arranged at a height above the hot air inlets of the generator. The steam boiler introduces into the chamber supersaturated steam at a temperature comprised between 125°C and 135°C, a volume of 0.12 m³, a pressure comprised between 4 and 8 bar, a flow of 140 K/h, said generator being a type 1, category C generator, with the optimum temperature of the supersaturated dry steam entering the chamber being 130°C.

Another detail of the device is that there is arranged on the upper central part of the chamber a forced air outlet which is carried out by means of a tube with an electric extractor, such that through the mentioned extractor, the TCA particles which have adhered to the supersaturated dry steam inside the chamber are discharged out together with the hot air, as indicated below in one of the steps of the method. As a result, a continuous airflow caused by the natural ventilation outlet and by the mentioned electrical extraction is created inside the chamber.

The method for reducing TCA in cork products of the invention comprises an initial step of causing the entry of hot air, then a step of causing the entry of supersaturated dry steam along with the simultaneous initiation of an electrical air extraction step, and finally a step involving an optimum process temperature for reducing TCA in cork products.

Once the cork products to be treated are located inside the closed chamber of the device of the invention, with these products preferably being introduced in batches in different metal containers with a lattice structure, the first step of the method corresponding to the entry of hot air is initiated. In this step, hot air at a temperature established between 175°C and 185°C is introduced into a previously closed chamber by means of at least one hot air generator, there preferably being two generators for the process located in different areas. By means of applying hot air, the temperature inside the chamber starts to rise gradually, and therefore the cork products start to heat up in this step, such that the particles making up each of the cork products start to expand as a result of the action of the air which starts to move the particles more quickly, and given that these particles need more space for movement, a small increase in the size of the body is obtained. At this point, it must be borne in mind that the TCA particles contained in the different cork products to be treated are found among the actual particles of the cork body.

As mentioned above, the temperature inside the chamber rises gradually as the hot air enters the chamber, and there is a need to bear in mind that the colder air moves out gradually through a natural ventilation outlet of the chamber arranged at a lower point. When the temperature inside the chamber reaches at least 80°C, with the optimum temperature being 85°C, a temperature sensor of the chamber itself activates at least one steam boiler, there preferably being optimally one boiler, starting the step of causing the entry of supersaturated dry steam. This operation can be performed manually.

In this step of causing the entry of dry steam, dry steam is injected into the chamber at a temperature comprised between 125°C and 135°C. In the cork products, this action causes moving TCA particles, together with the actual particles of each of the products, to combine with the supersaturated dry steam. For this reason, an upper electrical air extraction step by means of an electric extractor is initiated simultaneously along with this step. In that sense, the mentioned temperature sensor activates the steam generator and the electric extractor at the same instant. These functions can also be performed manually.

In this air extraction step, the saturated dry steam being injected into the chamber and which, as a result of its molecular configuration, combines with the TCA molecules, is rapidly discharged out of the chamber through the continuous ventilation flow created inside the chamber, between the natural ventilation mentioned above and electrical air extraction. Next, while the TCA molecules are extracted from each of the cork products, the temperature inside the chamber rises gradually due to the continuous entry of the hot air and the supersaturated dry steam, so when the temperature therein is between 100°C and 130°C, a temperature sensor activates a gradual drop in the temperature of the hot air from the generator, starting the last step of the process of the invention corresponding to the step involving the optimum temperature. This operation can also be a manual operation.

In this last step, the temperature of the generator starts to drop, preferably at intervals of 10°C, until the temperature inside the chamber is kept constant between 100°C and 110°C, establishing an optimum temperature of 110°C inside the chamber, so that the continuous extraction of the supersaturated dry steam with the TCA molecules is optimum; however, this temperature can be higher provided that it does not affect the internal structure or the properties of the cork, where this temperature may even reach 130°C, provided that it does not cause the mentioned deformations.

It must be pointed out that the operation of the treatment is feasible with both stationary products and moving products.

To complete the description that is being made and for the purpose of aiding to better understand the features of the invention, a set of drawings is attached as an integral part thereof in which the following is depicted with an illustrative and non-limiting character:
Figure 1 is a plan view of the inside of the device for reducing TCA in cork products described herein but not object of the invention.
Figure 2 is an elevational view of the side opposite the door of Figure 1.
Figure 3 is an external plan view of the device for reducing TCA in cork products of Figure 1.

### Description of the Drawings

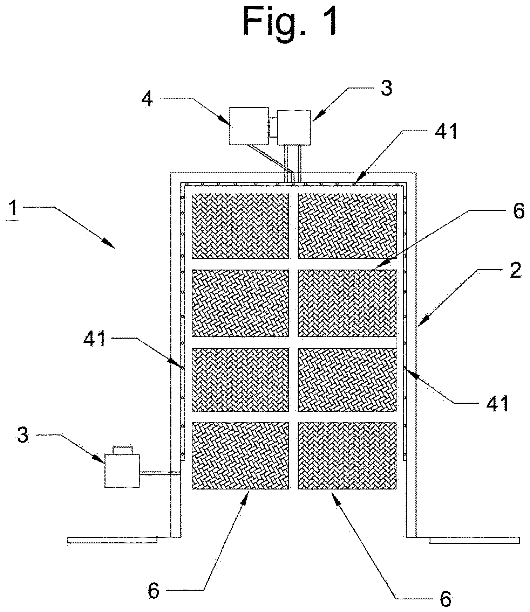

Figures 1 to 3 depict a device for reducing TCA in cork products As shown in Figure 1, the device (1) comprises two hot air generators (3), a supersaturated dry steam boiler (4), an electric extractor (5), and all of them being joined by means of tubes or the like to a chamber (2) having a natural ventilation outlet (21) and a temperature sensor (not depicted).

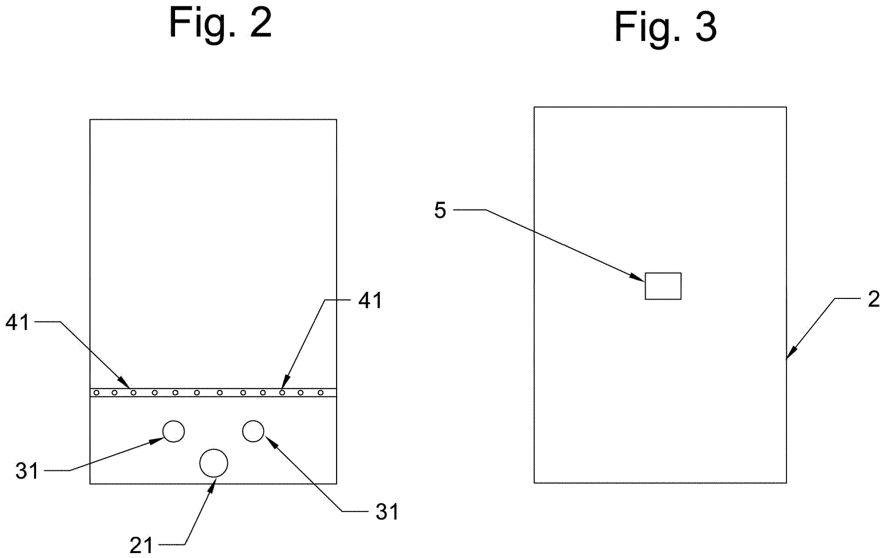

Metal containers (6) with a lattice structure in which the cork products to be treated are introduced are located inside the chamber (2), and it is must be pointed out that as shown in Figure 2 the natural ventilation outlet (21) of the chamber (2) is located at a lower point of the side or wall opposite the door.

As mentioned above, two hot air generators (3) are connected by means of tubes or the like to the chamber (2), these generators (3) are located at different points of the chamber (2) for creating a hot air inlet for the quick and uniform entry of hot air into the entire inner volume of the chamber. Each of these inlets is located at a lower point of the wall of the chamber (2) above the natural ventilation outlet (21), i.e., as shown in Figure 2, the hot air inlet (31) is located above the natural ventilation outlet (21). Each of the hot air generators (3) introduces into the chamber (2) air at an optimum temperature of 180°C, a nominal heat input of 103.2 KW, a heating capacity of 93 KW, and an airflow comprised between 1500 and 2000 m³/h.

As seen in Figures 1 and 2, the supersaturated dry steam inlet (41) for the entry of supersaturated dry steam into the chamber (2) is carried out by means of the linear arrangement of perforated tubes along three walls of the chamber (2). These perforated steam tubes are arranged at a height above the hot air inlet (31) for the entry of hot air from the generator (3). The steam boiler (4) introduces into the chamber (2) supersaturated steam at a optimum temperature of 130°C, a volume of 0.12 m³, a pressure comprised between 4 and 8 bar, a flow of 140 K/h, said generator being a type 1, category C generator.

Another detail of the device can be seen in Figure 3 which depicts the existence, on the surface of the chamber (2), of a forced air extraction carried out by means of a tube with an electric extractor (5), such that through the mentioned electric extractor (5), the TCA particles which have adhered to the supersaturated dry steam inside the chamber (2) are discharged out together with the hot air, as indicated below in one of the steps of the method. As a result, a continuous airflow caused by the natural ventilation outlet (21) and by the mentioned electrical extraction is created inside the chamber (2).

## Claims

1. A method for reducing TCA in all forms of natural cork-type cork products such as technical stoppers, discs for stopper, boiled and raw cork plank, wherein after introducing the corks into a device (1) such as the one defined in the preceding claim, the method is **characterized in that** it comprises the following steps:
- an initial step of at least one hot air generator (3) causing the entry of hot air into a chamber (2) at a temperature comprised between 175°C and 185°C, so the temperature inside the chamber starts to rise gradually and the molecules of the cork products start to move, expanding the body of each of the products; then,
- in a step of causing the entry of supersaturated dry steam, a temperature sensor of the chamber (2) itself activates at least one steam boiler (4) when the temperature inside the chamber (2) reaches 85°C, initiating the injection of supersaturated dry steam at a temperature comprised between 125°C and 135°C into the chamber (2) the moving TCA molecules of the cork products therefore combine with the molecules of the supersaturated dry steam; along with this step of causing the entry of supersaturated dry steam,
- an electric extractor (5) initiates an electrical air extraction step, whereby the supersaturated dry steam being injected into the chamber (2), after contact thereof with the cork products, is rapidly discharged out of the chamber (2) through a continuous ventilation flow created inside the chamber (2), between a natural ventilation (21) of the chamber (2) and the electrical air extraction brought about by the electric extractor (5); and subsequently,
- in a last step involving an optimum process temperature, while extraction is taking place and the temperature inside the chamber is increasing due to the continuous entry of the hot air and the supersaturated dry steam, a temperature sensor activates at a temperature comprised between 100°C and 130°C a drop in temperature at the hot air inlet (31) for the entry of hot air from the generator (3) to the chamber (2), such that the temperature inside the chamber is kept constant at a temperature between 100°C and 110°C during the TCA molecule extraction process.

2. The method for reducing TCA in cork products according to claim 1, **characterized in that** the drop in temperature of the hot air generator (3) in the last step of the method occurs gradually at intervals of 10°C.

## Patentansprüche

1. Verfahren zur Reduzierung von TCA in sämtlichen Formen von Naturkork-artigen Korkerzeugnissen wie technischen Stopfen, Scheiben für Stopfen, einer gekochten und unverarbeiteten Korkplatte, wobei nach dem Einführen der Korken in eine Vorrichtung (1), wie diejenige die im vorhergehenden Anspruch definiert wurde, das Verfahren **dadurch gekennzeichnet ist, dass** es die folgenden Schritte umfasst:
- einen anfänglichen Schritt von mindestens einem Heißluftgenerator (3), welcher den Eintritt von Heißluft in eine Kammer (2) bei einer Temperatur, welche zwischen 175°C und 185°C liegt, bewirkt, und deshalb fängt die Temperatur an innerhalb der Kammer allmählich anzusteigen und die Moleküle der Korkerzeugnisse fangen an sich zu bewegen, sodass sich der Körper jedes der Erzeugnisse ausdehnt; dann,
- in einem Schritt des Bewirkens des Eintritts von übersättigtem Trockendampf, ein Temperatursensor der Kammer (2) selbst mindestens einen Dampfkessel (4) aktiviert, wenn die Temperatur innerhalb der Kammer (2) 85°C erreicht, sodass das Einspritzen von übersättigtem Trockendampf bei einer Temperatur, welche zwischen 125°C und 135°C liegt, in die Kammer (2) gestartet wird, wobei sich daher die sich bewegenden TCA-Moleküle der Korkerzeugnisse mit den Molekülen des übersättigten Trockendampfs kombinieren; zusammen mit diesem Schritt des Bewirkens des Eintritts von übersättigtem Trockendampf,
- ein elektrischer Absauger (5) einen elektrischen Luftabsaugungsschritt startet, wodurch der übersättigte Trockendampf, welcher in die Kammer (2) eingespritzt wird, nach dem Kontakt desselben mit den Korkerzeugnissen, schnell aus der Kammer (2) über einen kontinuierlichen Belüftungsstrom abgeführt wird, welcher innerhalb der Kammer (2), zwischen einer natürlichen Belüftung (21) der Kammer (2) und der elektrischen, vom elektrischen Absauger (5) hervorgerufenen Luftabsaugung erzeugt wird; und anschließend,
- in einem letzten Schritt, welcher eine optimale Prozesstemperatur involviert, während die Absaugung stattfindet und sich die Temperatur innerhalb der Kammer aufgrund vom kontinuierlichen Eintritt der Heißluft und des übersättigten Trockendampfs erhöht, ein Temperatursensor bei einer Temperatur, welche zwischen 100°C und 130°C liegt, einen Temperaturabfall am Heißlufteingang (31) für den Eintritt von Heißluft aus dem Generator (3) in die Kammer (2) startet, sodass die Temperatur innerhalb der Kammer konstant bei einer Temperatur zwischen 100°C und 110°C während des TCA-Molekülabsaugungsprozesses gehalten wird.

2. Verfahren zur Reduzierung von TCA in Korkerzeugnissen nach Anspruch 1, **dadurch gekennzeichnet, dass** der Temperaturabfall des Heißluftgenerators (3) im letzten Schritt des Verfahrens allmählich mit Abständen von 10°C stattfindet.

## Revendications

1. Procédé de réduction de la TCA dans toutes les formes de produits en liège de type liège naturel tels que bouchons techniques, disques pour bouchons, planches en liège bouilli et brut, dans lequel, après avoir introduit les lièges dans un dispositif (1) tel que celui défini dans la revendication précédente, le procédé est **caractérisé en ce qu'**il comprend les étapes suivantes :
- une étape initiale d'au moins un générateur d'air chaud (3) causant l'entrée d'air chaud dans une chambre (2) à une température comprise entre 175°C et 185°C, de sorte que la température à l'intérieur de la chambre commence à monter graduellement et les molécules des produits en liège commencent à bouger, en dilatant le corps de chacun des produits ;
puis,
- dans une étape causant l'entrée de vapeur sèche sursaturée, un capteur de température de la chambre (2) lui-même active au moins une chaudière à vapeur (4) lorsque la température à l'intérieur de la chambre (2) atteint 85°C, initiant l'injection de vapeur sèche sursaturée à une température comprise entre 125°C et 135°C dans la chambre (2), les molécules de TCA des produits en liège bougeant se combinent donc avec les molécules de la vapeur sèche sursaturée ;
au long de cette étape causant l'entrée de vapeur sèche sursaturée,
- un extracteur électrique (5) initie une étape d'extraction d'air électrique, au moyen de laquelle la vapeur sèche sursaturée étant injectée dans la chambre (2), après contact de celle-ci avec les produits en liège, est rapidement déchargée de la chambre (2) à travers un flux de ventilation continu créé à l'intérieur de la chambre (2), entre une ventilation naturelle (21) de la chambre (2) et l'extraction d'air électrique provoquée par l'extracteur électrique (5) ; et ensuite,
- dans une dernière étape impliquant une température de processus optimale, tandis que l'extraction se déroule et que la température à l'intérieur de la chambre monte du fait de l'entrée continue de l'air chaud et de la vapeur sèche sursaturée, un capteur de température active à une température comprise entre 100°C et 130°C une baisse de température à l'arrivée de l'air chaud (31) pour l'entrée d'air chaud depuis le générateur (3) à la chambre (2), de sorte que la température à l'intérieur de la chambre est maintenue constante à une température entre 100°C et 110°C pendant le processus d'extraction de molécules de TCA.

2. Procédé de réduction de la TCA dans les produits en liège selon la revendication 1, **caractérisé en ce que** la baisse de température du générateur d'air chaud (3) dans la dernière étape du procédé se produit graduellement à des intervalles de 10°C.
